# EUROPÄISCHE PATENTANMELDUNG

(11) **EP 2 016 828 A1**
(43) Veröffentlichungstag der Anmeldung: **21.01.2009**
(21) Anmeldenummer: 07014232.8
(22) Anmeldetag: 20.07.2007
(51) Int. Cl.: A01N 59/16, A01N 59/20, D06M 11/42

(54) **Mikrobizide Mischung, Verfahren zur ihrer Herstellung und Verwendung derselben**

(71) Anmelder: Bühler PARTEC GmbH, 66123 Saarbrücken (DE)
(72) Erfinder: Steingröver, Klaus, Dr., 66125 Saarbrücken (DE); Tabellion, Frank, Dr., 66121 Saarbrücken (DE)
(74) Vertreter: Frommhold, Joachim

(57) **Zusammenfassung**

Die Erfindung bezieht sich auf eine mikrobizide Mischung und auf ein Verfahren zu deren Herstellung sowie auf ein mikrobizides Polymer, dessen Herstellung und dessen Verwendung für die Fertigung mikrobizider Formkörper und Fasern auf Polymerbasis.

## Beschreibung

Die Erfindung bezieht sich auf eine mikrobizide Mischung und auf ein Verfahren zu deren Herstellung sowie auf ein mikrobizides Polymer, dessen Herstellung und dessen Verwendung für die Fertigung mikrobizider Formkörper und Fasern auf Polymerbasis.

Mikrobizide Mischungen werden zur Verbesserung der Hygiene, zur Desinfektion also im Allgemeinen zum Schutz von Gegenständen, Textilien und dergleichen vor Befall von Mikroorganismen wie z.B. Bakterien, Pilzen und Algen verwendet. Neben zahlreichen, meist sehr spezifischen organischen Wirkstoffen können hierzu auch weniger spezifisch wirkende Mikrobizide wie Wasserstoffperoxid, Metallionen und insbesondere Silberionen verwendet werden.

Stark oxidierend wirkendes Wasserstoffperoxid zerstört die Zellwände von Mikroorganismen wie Viren, Amöben, Bakterien, Pilzen, Algen und Sporen. Dabei zerfällt das Wasserstoffperoxid zu Wasser und molekularem Sauerstoff- Es bleiben also neben abgetöteten Mikrobenzellen keine Desinfektionsmittel-Rückstände zurück.

Auch die Verwendung von Silber bzw. Silberionen ist bekannt. Ihre Wirkung beruht auf einer Störung des Stoffwechsels von Mikroben, wodurch zumindest deren Wachstum und Vermehrung beeinträchtigt wird. Wenn auch in der Regel keine schlagartige Abtötung einer grossen Anzahl von Mikroben wie bei Verwendung von Wasserstoffperoxid erfolgt, eignen sich Silberionen dennoch zu einer nachhaltigen Bekämpfung von Mikroben, da die Silberionen im Gegensatz zu den Molekülen des Wasserstoffperoxids nicht verbraucht werden, sondern in der mikrobenhaltigen Umgebung auch nach längerer Zeit anwesend und mikrobizid wirksam sind.

Bei einer lediglich oberflächlichen Anwendung von Silber/Silberionen auf Formkörpern oder Textilfasern werden die mikrobiziden Silberionen spätestens beim Reinigungs- oder Waschvorgang von den Oberflächen entfernt, so dass die mikrobizide Wirkung auf den Oberflächen verloren geht. Auch silberhaltige Beschichtungen von Formkörpern oder Textilfasern (mikrobizide "Ausrüstungen") nutzen sich nach längerem Gebrauch bzw. Tragen der Textilien nach und nach ab, was ebenfalls zu einer nachlassenden mikrobiziden Wirkung führt.

Um diese Nachteile der rein oberflächlichen Anwendung von Silber/Silberoxid/Silberionen bzw. anorganischer Mikrobizide zu vermeiden, werden z.B. Silber, Silberoxid bzw. Silberionen bzw. anorganischer Mikrobizide in partikuläre Trägermaterialien, also Matrices wie zum Beispiel Gläser eingefügt. Diese nachfolgend Mikrobizid-Komposit genannten Systeme schützen den darin vorliegenden mikrobiziden Wirkstoff, insbesondere auf Grund ihrer Temperaturbeständigkeit, und ermöglichen eine Verarbeitung in geschmolzenen Polymeren. Die durch Trockenvermahlung hergestellten Mikrobizid-Kompositpartikel sind meistens scharfkantig und neigen bei der Weiterverarbeitung, insbesondere bei der Einarbeitung in die Polymere, zur Agglomeration.

Die daraus hergestellten Formkörper oder Textilfasern sind äusserst abrasiv. Die abrasive Eigenschaft führt beim Einsatz dieser Materialien als Fasern zu einem erhöhten Verschleiss bei der Verspinnung z.B. an Fadenführem und Leiteinrichtungen der Verspinnungsanlage und macht einen industriellen Einsatz in diesem Bereich unmöglich. Darüber hinaus führt eine Reagglomeration bei der Fadenherstellung zu hohen Druckfilterwerten, was nicht nur die Verarbeitung erschwert oder unmöglich macht, sondern auch die Festigkeit der so hergestellten Fäden stark beeinträchtigt.

Der Erfindung liegt daher die Aufgabe zugrunde, ein mikrobizides Polymer bereitzustellen, das sich für die Herstellung von Gebrauchsgegenständen wie Formkörpern oder Textilfasern eignet, die zuvor beschrieben Nachteile des Standes der Technik nicht aufweist und dennoch eine lange anhaltende mikrobizide Wirkung an der Oberfläche des Gebrauchsgegenstands entfaltet.

Diese Aufgabe wird durch eine mikrobizide Mischung gemäss Anspruch 1, durch ein Verfahren zu deren Herstellung gemäss Anspruch 16 sowie durch ein mikrobizides Polymer gemäss Anspruch 32, dessen erfindungsgemässe Herstellung und Verwendung für die Fertigung mikrobizider Formkörper und Fasern auf Polymerbasis gelöst.

Der erfindungsgemässe Einsatz von Mikrobizid-Kompositpartikeln, die in einem Polymer dispergiert sind, gewährleistet eine nachhaltige mikrobizide Wirkung an der Polymeroberfläche, da die Mikrobizid-Komposite in der Polymermatrix fest eingebunden sind, so dass auch bei einer Abnutzung der Polymeroberfläche stets mikrobizide Kompositpartikel exponiert und mikrobizid wirksam sind.

Die erfindungsgemässe mikrobizide Mischung weist ein zyklisches Oligomer als Bindemittel sowie Mikrobizid-Kompositpartikel auf, wobei die Mikrobizid-Kompositpartikel vorzugsweise Metallionen freisetzen, die aus der Matrix der Mikrobizid-Komposite austreten können. Eine besonders starke mikrobizide Wirkung erhält man, wenn die Metallionen Silberionen und/oder Kupferionen sind.

Mikrobizid-Komposite sind im allgemeinen im Handel erhältlich wie z.B. Alphasan® der Firma Milliken & Company (USA), Sanitzed Silber® BCA 21-41, BC A 21-51, BC A 21-61 der Firma SANITIZED AG (Schweiz), lonpure® von Ishizuka Glass (Japan), Zeomic® bzw. Aglon® der Firma Sinanen (USA), Microfree® der Firma Dupont, Jmac® von Johnson Mathey usw.

Die Matrix der Mikrobizid-Komposite besteht aus Glas, Keramik, Glaskeramik, Polymer oder Mischungen dieser Materialien, was auch Zeolite beinhaltet. Die mikrobizide Komponente der Mikrobizid-Komposite kann aus jedem beliebigen mikrobiziden Material bestehen, das aus der Matrix in irgendeiner Form freigesetzt wird. Bevorzugt handelt es sich dabei um Schwermetalle in ionischer und elementarer Form sowie deren Legierungen, besonders bevorzugt handelt es sich um Silber und/oder Kupfer in ionischer und elementarer Form sowie deren Legierungen.

Die mikrobizide Mischung kann als Schüttgut, insbesondere als Pulver oder Granulat, bereitgestellt werden.

Der Anteil an Mikrobizid-Komposit beträgt 1 Gew.% bis 99 Gew.%., bevorzugt 50 Gew.% bis 97 Gew.%, besonders bevorzugt 60 Gew.% bis 85 Gew.% in der mikrobiziden Mischung.

Neben den Mikrobizid-Kompositpartikeln können auch andere organische und/oder anorganische Teilchen oder Stoffe in der mikrobizide Mischung enthalten sein.

Dabei kann es sich sowohl um Nano- als auch um Mikro-Teilchen handeln.

Bei den Teilchen handelt es sich um feste Partikel bzw. Feststoffteilchen aus jedem beliebigen geeigneten Material. Im Folgenden werden die Ausdrücke Teilchen und Partikel miteinander austauschbar verwendet. Es kann sich z.B. um organische, auch polymere, z.B. aus Kunststoff, oder anorganische Teilchen handeln, wobei anorganische Partikel bevorzugt sind. Beispiele für organische Teilchen sind Dendrimere, Glukane oder Cyclodextrine, die gegebenenfalls Metallatome in komplexierter Form beinhalten. Beispiele für anorganische Teilchen sind Partikel aus einem Element, einer Legierung oder einer Elementverbindung. Die anorganischen Partikel bestehen vorzugsweise aus Verbindungen von Metallen oder Halbmetallen, wie z.B. Si oder Ge, oder Bor, besonders bevorzugt aus Metall- oder Halbmetalloxiden, einschliesslich hydratisierten Oxiden, Oxid-Hydroxiden oder Hydroxiden.

Beispiele für Teilchen aus einem Element sind Partikel aus Kohlenstoff, wie Russ oder Aktivkohle, aus einem Halbmetall, wie Silicium (einschliesslich technischem Si, Ferrosilicium und Reinsilicium) oder Germanium, oder einem Metall, wie z.B. Eisen (auch Stahl), Chrom, Zinn, Kupfer, Aluminium, Titan, Gold und Zink. Beispiele für Teilchen aus einer Legierung können Partikel aus Bronze oder Messing sein.

Beispiele für die bevorzugten Metallverbindungen und Verbindungen von Halbleiterelementen oder Bor sind gegebenenfalls hydratisierte Oxide, wie ZnO, CdO, Si02, Ge02, TiO2, ZrO2, Ce02, Sn02, Al2O3 (in allen Modifikationen, insbesondere als Korund, Böhmit, AlO(OH), auch als Aluminiumhydroxid), In2O3, La203, Fe203, Cu2O, Ta205, Nb205, V205, MoO3 oder WO3, entsprechende Mischoxide, z.B. Indium-Zinn-Oxid (ITO), Antimon-Zinn-Oxid (ATO), fluor-dotiertes Zinnoxid (FTO) und solche mit Perowskitstruktur, wie BaTi03 und PbTi03, Chalkogenide, wie beispielsweise Sulfide (z.B. CdS, ZnS, PbS und Ag2S), Selenide (z.B. GaSe, CdSe und ZnSe) und Telluride (z.B. ZnTe oder CdTe), Halogenide, wie AgCl, AgBr, Agl, CuCl, CuBr, Cdl2 und Pbl2, Carbide, wie CdC2 oder SiC, Silicide, wie MoSi2, Arsenide, wie AlAs, GaAs und GeAs, Antimonide, wie InSb, Nitride, wie BN, AIN, Si3N4 und Ti3N4, Phosphide, wie GaP, InP, Zn3P2 und Cd3P2, sowie Carbonate, Sulfate, Phosphate, Silicate, Zirconate, Aluminate und Stannate von Elementen, insbesondere von Metallen oder Si, z.B. Carbonate von Calcium und/oder Magnesium, Silicate, wie Alkalisilicate, Talkum, Tone (Kaolin) oder Glimmer, und Sulfate von Barium oder Calcium. Weitere Beispiele für zweckmässige Teilchen sind ferner Magnetit, Maghemit, Spinelle (z.B. MgO-Al2O3), Mullit, Eskolait, Tialit, SiO2-TiO2, oder Biokeramiken, z.B. Calciumphosphat und Hydroxyapatit. Es kann sich um Teilchen aus Glas oder Keramik handeln.

Es kann sich dabei z.B. um Partikel handeln, die gewöhnlich für die Herstellung von Glas (z. B. Borosilicatglas, Natronkalkglas oder Kieselglas), Glaskeramik oder Keramik (z.B. auf Basis der Oxide Si02, BeO, Al2O3, Zr02 oder MgO oder der entsprechenden Mischoxide, Elektro- und Magnetokeramik, wie Titanate und Ferrite, oder Nichtoxidkeramiken, wie Siliciumnitrid, Siliciumcarbid, Bornitrid oder Borcarbid) verwendet werden. Es kann sich auch um Partikel handeln, die als Füllstoffe oder Pigmente dienen. Technisch wichtige Füllstoffe sind z.B. Füllstoffe auf Basis von Si02, wie Quarz, Cristobalit, Tripolit, Novaculit, Kieselgur, Kieselerde, pyrogene Kieselsäuren, Fällungskieselsäuren und Kieselgele, Silicate, wie Talkum, Pyrophyllit, Kaolin, Glimmer, Muskovit, Phlogopit, Vermiculit, Wollastonit und Perlite, Carbonate, wie Calcite, Dolomite, Kreide und synthetische Calciumcarbonate, Russ, Sulfate, wie Schwerspat und Leichtspat, Eisenglimmer, Gläser, Aluminiumhydroxide, Aluminiumoxide und Titandioxid, und Zeolithe. Es können auch Mischungen dieser Partikel verwendet werden.

Typische Materialien für die Partikel können z.B. mindestens ein Element ausgewählt aus C, N,O, S, B, Si, Al, Ti, Zr, Zn, Fe, Ag und Cu umfassen. Bevorzugt sind gegebenenfalls hydratisierte Siliciumoxide und Metalloxide, einschliesslich Oxidhydroxide und Hydroxide, wie Vanadium-, Eisen-, Wolfram-, Titan-, Aluminium- oder Zinkoxide oder Mischungen davon.

Die Herstellung solcher Teilchen ist bekannt. Beispiele für Verfahren zur Herstellung von Teilchen sind Flammpyrolyse, Plasmaverfahren, Gasphasenkondensationsverfahren, Kolloidtechniken, Präzipitationsverfahren, Sol-Gel-Prozesse, kontrollierte Nukleations- und Wachstumsprozesse, MOCVD-Verfahren und (Mikro)emulsionsverfahren. Diese Verfahren sind in der Literatur ausführlich beschrieben.

Die verwendbaren Teilchen sind im allgemeinen im Handel erhältlich. Beispiele für Si02-Teilchen sind handelsübliche Kieselsäureprodukte, z.B. Kieselsole, wie die Levasile®, Kieselsole der Bayer AG, oder pyrogene Kieselsäuren, z.B. die Aerosil®-Produkte von Degussa. Selbstverständlich können auch alle als Füllstoffe eingesetzten Teilchen gewöhnlich im Handel erhalten werden. Bei den eingesetzten Teilchen kann es sich z.B. um Nanopartikel oder Mikropartikel handeln.

Die eingesetzten Teilchen und Füllstoffe können auch oberflächenfunktionalisiert bzw. oberflächenmodifiziert sein. Im Folgenden werden die Ausdrücke "oberflächenfunktionalisiert" und "oberflächenmodifiziert" miteinander austauschbar verwendet.

Die Oberflächenmodifizierung von Teilchen und Füllstoffen mit bestimmten Gruppen, um die Teilchen mit einer oder mehreren zusätzlichen Funktionen zu versehen, ist dem Fachmann vertraut und er kann solche oberflächenmodifizierten Teilchen ohne weiteres herstellen oder gegebenenfalls im Handel erwerben. Oberflächenmodifizierte Teilchen werden im allgemeinen durch Umsetzung der Teilchen mit geeigneten Oberflächenmodifizierungsmitteln erhalten, wobei die Zugabe des Oberflächenmodifizierungsmittel auch in Situ während der Herstellung der Teilchen erfolgen kann. Die Umsetzung erfolgt unter solchen Bedingungen, dass eine Anbindung des Modifizierungsmittels, z.B. durch chemische Bindung oder Wechselwirkung, auf der Oberfläche der Teilchen erfolgt. Die Bedingungen hängen naturgemäss von der Art der Teilchen und der Oberflächenmodifizierungsmittel ab. Es kann ein einfaches Rühren bei Raumtemperatur ausreichen, gegebenenfalls sind aber auch ein Energieeintrag, z.B. durch Erwärmen notwendig. Der Belegungsgrad der Teilchenoberflächen mit den Modifizierungsmitteln kann z.B. durch das eingesetzte Mengenverhältnis der Edukte gesteuert werden.

Dem Fachmann ist bekannt, dass sich auf der Oberfläche von Teilchen in der Regel Gruppen befinden, wobei es sich bei diesen Oberflächengruppen um funktionelle Gruppen handeln kann, die im allgemeinen relativ reaktionsfähig sind. Beispielsweise befinden sich auf der Oberfläche von Teilchen Restvalenzen, wie Hydroxygruppen und Oxygruppen, z.B. bei Metalloxidpartikeln, oder Thiolgruppen und Thiogruppen, z.B. bei Metallsulfiden, oder Amino-, Amid- und Imidgruppen, z.B. bei Nitriden.

Das Oberflächenmodifizierungsmittel weist zum einen mindestens eine funktionelle Gruppe, die mit auf der Oberfläche der Teilchen vorhandenen reaktionsfähigen Gruppen unter Anbindung chemisch reagieren oder wechselwirken kann, und zum anderen mindestens eine weitere funktionelle Gruppe auf. Die Anbindung kann durch chemische Bindung, wie kovalente, einschliesslich koordinative Bindungen (Komplexe), oder ionische (salzartige) Bindungen der funktionellen Gruppe mit den Oberflächengruppen der Teilchen erfolgen, während als Wechselwirkungen beispielhaft Dipol-Dipol-Wechselwirkungen, polare Wechselwirkungen, Wasserstoffbrückenbindungen und van-der-Waals-Wechselwirkungen zu nennen sind. Bevorzugt ist die Ausbildung einer chemischen Bindung. So kann zwischen den funktionellen Gruppen des Modifizierungsmittels und dem Partikel z.B. eine Säure/Base-Reaktion, eine Komplexbildung oder eine Veresterung stattfinden. Solche Oberflächenmodifizierungsmittel sind dem Fachmann bekannt, und er kann ohne weiteres diejenigen auswählen, die für das jeweilige Teilchen geeignet sind.

Bei der funktionellen Gruppe, die das Oberflächenmodifizierungsmittel umfasst, handelt es sich z.B. um Carbonsäuregruppen, Säurechloridgruppen, Estergruppen, Nitril- und Isonitrilgruppen, OH-Gruppen, Alkylhalogenidgruppen, SH-Gruppen, Epoxidgruppen, Anhydridgruppen, Säureamidgruppen, primäre, sekundäre und tertiäre Aminogruppen, Si-OH-Gruppen bzw. hydrolysierbare Reste von Silanen (nachstehend erläuterte Gruppen Si-X) oder C-H-acide Gruppierungen, wie β-Dicarbonylverbindungen. Das Modifizierungsmittel kann auch mehr als eine derartige funktionelle Gruppe umfassen, wie z.B. in Aminosäuren oder EDTA.

Beispiele für geeignete Oberflächenmodifizierungsmittel sind demgemäß Mono- und Polycarbonsäuren, entsprechende Säureanhydride, Säurechloride, Ester und Säureamide, Alkohole, Alkylhalogenide, Aminosäuren, Imine, Nitrile, Isonitrile, Epoxyverbindungen, Mono- und Polyamine, Dicarbonylverbindungen, Silane und Metallverbindungen, die über eine funktionelle Gruppe verfügen, die mit den Oberflächengruppen der Partikel reagieren kann. Besonders bevorzugt eingesetzte Modifizierungsmittel sind Silane, Phosphorsäuren, Phoshorsäurederivate, Carbonsäuren, Carbonsäurederivate, wie Säureanhydride und Säurehalogenide, insbesondere Säurechloride, Alkohole, Alkylhalogenide, wie Alkylchloride, Alkylbromide und Alkyliodide, wobei der Alkylrest gegebenenfalls substituiert ist, insbesondere mit Fluor. Es können ein oder mehrere Modifizierungsmittel verwendet werden.

Bevorzugte Oberflächenmodifizierungsmittel sind hydrolysierbare Silane mit mindestens einer nicht hydrolysierbaren Gruppe. Dabei handelt es sich besonders bevorzugt um hydrolysierbare Silane, die mindestens eine nicht-hydrolysierbare Gruppe aufweisen,

Geeignete hydrolysierbare Silane mit hydrophober und/oder oleophober Gruppe besitzen z.B. die allgemeine Formel

RₐSiX₍₄₋ₐ₎ (I)

worin R gleich oder verschieden ist und einen nicht-hydrolysierbaren Rest darstellt, wobei mindestens eine Gruppe R eine hydrophobe und/oder oleophobe Gruppe ist, X eine hydrolysierbare Gruppe oder OH ist und a den Wert 1, 2 oder 3, vorzugsweise 1 oder 2, hat.

Die hydrolysierbare Gruppe X ist z.B. Wasserstoff oder Halogen (F, Cl, Br oder I), Alkoxy (vorzugsweise C₁₋₆-Alkoxy, wie z.B. Methoxy, Ethoxy, n-Propoxy, i-Propoxy und Butoxy), Aryloxy (vorzugsweise C₆₋₁₀-Aryloxy, wie z.B. Phenoxy), Acyloxy (vorzugsweise C₁₋₆₋Acyloxy, wie z.B. Acetoxy oder Propionyloxy), Alkylcarbonyl (vorzugsweise C₂₋₇-Alkylcarbonyl, wie z.B. Acetyl), Amino, Monoalkylamino oder Dialkylamino mit vorzugsweise 1 bis 12, insbesondere 1 bis 6 Kohlenstoffatomen in der bzw. den Alkylgruppe(n).

Der nicht-hydrolysierbare Rest R ist z.B. Alkyl-, wie z.B. Methyl, Ethyl, n-Propyl, Isopropyl, n-Butyl, s-Butyl und t-Butyl, Pentyl, Hexyl oder Cyclohexyl Alkenyl-, wie z.B. Vinyl, 1-Propenyl, 2-Propenyl und Butenyl, Vinyl- oder Allyl-, Epoxy-, Hydroxy-, Ether-, Amino-, Monoalkylamino-, Dialkylamino-, gegebenenfalls substituierte Anilino-, Amid-, Carboxy-, Acryl-, Acryloxy-, Methacrylat-, Methacryloxy-, Silyl-, Mercapto-, Cyano-, Alkoxy-, Isocyanato-, Aldehyd-, Alkylcarbonyl-, Säureanhydrid- und Phosphorsäuregruppen

Beispiele für entsprechende Silane sind γ-Glycidyloxypropyltrimethoxysilan (GPTS), γ-Glycidyloxypropyltriethoxysilan (GPTES), 3-Aminopropyltrimethoxysilan (APTS), 3-(Meth)acryloxypropyltriethoxysilan oder 3-(Meth)acryloxypropyltrimethoxysilan. Weitere konkrete Beispiele für Oberflächenmodifizierungsmittel, die zur Einführung zusätzlicher Gruppen eingesetzt werden können, sind gesättigte oder ungesättigte Mono- und Polycarbonsäuren, wie z.B. Ameisensäure, Acrylsäure, Methacrylsäure oder Crotonsäure, Mono- und Polyamine, wie Methylamin, oder Ethylendiamin, -Dicarbonylverbindungen, wie Acetylaceton, oder Aminosäuren.

Das Oberflächenmodifizierungsmittel weist bevorzugt ein Molekulargewicht von nicht mehr als 1.500 und bevorzugter nicht mehr als 1.000 auf, es können aber auch Modifizierungsmittel mit höherem Molekulargewicht verwendet werden.

Die erfindungsgemässe Herstellung des mikrobiziden Polymers erfolgt durch Vermischen (Compoundieren) eines Polymers mit der erfindungsgmässen mikrobiziden Mischung. Das fertige Polymer kann ebenfalls zu einem Schüttgut, insbesondere Pulver oder Granulat, verarbeitet werden.

Das Vorliegen der mikrobiziden Mischung als Schüttgut erleichtert deren Vermischen (Compoundieren) mit einem Polymer.

Vorzugsweise sind die Mikrobizid-Kompositpartikel kleiner als 5 µm. Dies gewährleistet ein ausreichend großes Oberfläche/Volumen-Verhältnis für das in dem Polymer dispergierte mikrobizide Glasmaterial.

Der Anteil an Mikrobizid-Kompositpartikeln beträgt zwischen 0,1 Gew.% und 30 Gew.%., bevorzugt zwischen 0,2 Gew.% und 25 Gew.%. und besonders bevorzugt zwischen 0,5 Gew.% und 20 Gew.% im mikrobiziden Polymer.

Bei einer besonders vorteilhaften Ausführung der Erfindung sind Mikrobizid-Kompositpartikel kleiner als 1 µm. Dadurch erhält man ein noch größeres Oberftäche/Volumen-Verhältnis und somit eine hohe Wirksamkeit des Komposits, so dass auch schon ein Anteil an Mikrobizid-Kompositpartikeln von 1 Gew.% bis 3 Gew.% ausreichend ist.

Wenn die Mikrobizid-Kompositpartikeln kleiner als 1 µm sind, erhält man erfindungsgemässe mikrobizide Polymere mit einer besonders glatten Oberfläche. Dies ist bei Gebrauchsgegenständen, Formkörpern und dergleichen eine angenehme Eigenschaft. Bei Verwendung der erfindungsgemässen mikrobiziden Polymere zur Verspinnung zu Textilfasern ergeben sich noch zwei weitere Vorteile. Einerseits führen die kleinen Mikrobizid-Kompositpartikel zu einer nur geringen Schwächung der Zugfestigkeit solcher Textilfasern. Andererseits ergibt sich eine nur geringe Abrasion der Fadenführungen in einer Spinnerei.

Da die erfindungsgemässe mikrobizide Mischung als Bindemittel ein zyklisches Oligomer aufweist, kann bei seiner Herstellung die Bildung von Glaspartikel-Agglomeraten wirksam verhindert werden.

Bei einer besonders bevorzugten Ausführung der mikrobiziden Mischung ist das Bindemittel ein zyklisches Ester-Oligomer. Besonders vorteilhaft zur Verhinderung von Partikel-Agglomeraten ist es, wenn das Bindemittel ein makrozyklisches Ester-Oligomer ist, das in seiner Molekülstruktur mindestens einen Ring besitzt, der durch fünf oder mehr kovalent gebundene Atome gebildet ist.

Vorzugsweise enthält die erfindungsgemässe mikrobizide Mischung nur das Bindemittel und die mikrobiziden Glaspartikel.

Das erfindungsgemässe Verfahren zur Herstellung einer mikrobiziden Mischung weist die folgenden Schritte auf:
a) Zerkleinern eines Mikrobizid-Komposits durch Scherung und/oder Prallung zu Mikrobizid-Kompositpartikeln;
b) Dispergieren der Mikrobizid-Kompositpartikel in einer Flüssigkeit zu einer Mikrobizid-Kompositpartikeln-Suspension;
c) Vermischen der Glaspartikel-Suspension mit einer Bindemittel-Lösung zu einer Mischung bestehend aus Bindemittel-Lösung und darin dispergierten Mikrobizid-Kompositpartikeln; und
d) Aufkonzentrieren der Mischung durch Entfernen mindestens eines Teils der Flüssigkeit.

Erfindungsgemäss wird als Bindemittel ein zyklisches Polymer verwendet.

Durch die Anwesenheit des weiter oben beschriebenen Bindemittels wird beim Aufkonzentrieren (Schritt d) eine Agglomeration der zuvor (Schritt a) zerkleinerten Mikrobizid-Kompositpartikel verhindert.

Die Schritte a) und b) werden vorzugsweise durch Nassvermahlung in einer Mühle mit Mahlhilfskörpern durchgeführt. Besonders vorteilhaft ist es dabei, wenn die Schritte a) und b) in einer Rührwerkskugelmühle erfolgen, deren Prozessraum zumindest teilweise mit der in Schritt b) verwendeten Flüssigkeit gefüllt ist.

Alternativ können die Schritte a) und b) auch in einem Dreiwalzwerk durchgeführt werden.

Vorzugsweise werden die in Schritt a) erzeugten Mikrobizid-Kompositpartikeln auf Größen unter 5 µm und besonders bevorzugt auf Größen unter 1 µm vermahlen.

Zweckmässigerweise werden die Schritte a) und b) und ggfs. der Schritt c) durch Nassvermahlung in einer Mühle mit Mahlhilfskörpern durchgeführt. Vorzugsweise erfolgen die Schritte a), b) und c) in einer Rührwerkskugelmühle, deren Prozessraum zumindest teilweise mit Flüssigkeit gefüllt ist. Zweckmässigerweise verwendet man in Schritt a) als Ausgangsmaterial vorzerkleinerte Mikrobizid-Kompositpartikel. Für die als Lösungsmittel dienende Flüssigkeit wird ein inertes organische Lösemittel, vorzugsweise Butylacetat, MEK, MIBK, Toluol oder Xylol verwendet.

Der Schritt c) und d) können unter reduziertem Druck erfolgen.

Das erfindungsgemässe mikrobizide Polymer kann vorteilhaft zur Herstellung von Fasern, insbesondere zur Herstellung von Textilfasern mittels Spinnverfahren, verwendet werden.

Ausserdem kann es zur Herstellung von Formkörpern, insbesondere zur Herstellung von Preforms durch Spritzgiessen oder zur Herstelllung von Flaschen durch Streckblasformen, verwendet werden.

Weitere Vorteile, Merkmale und Anwendungsmöglichkeiten der Erfindung ergeben sich aus der folgenden Beschreibung von Beispielen.

### Beispiele

### Herstellung von mikrobiziden Mischungen

### Beispiel 1: Mikrobizide Mischung I

300 g des Mikrobizid-Komposits (BC A 21-51, Sanitized) werden in 700 g Butylacetat dispergiert. Anschließend wird diese Mischung in einer Mühle (PML I der Firma Bühler AG, Mahlraum ZrO2, Mahlscheiben ZrO2) mit 0,3 mm Yttrium-stabilisierten ZrO2 Mahlkugeln der Firma Tosoh im Rezirkulationsmodus vermahlen. Der Energieeintrag beträgt 2000 kWh/t. Man erhält die Dispersion I.

Die Dispersion I wird mit 15 g CBT100-Pulver der Firma Cyclics versetzt. Anschließend wird die Dispersion durch Rühren homogenisiert und das Lösemittel am Rotationsverdampfer unter Vakuum entfernt. Das so erhaltene Pulver wird in einem Mörser aufgemahlen. Man erhält die erfindungsgemässe mikrobizide Mischung I (95,2 Gew.% Mikrobizid-Komposit (BC A 21-51)).

### Beispiel 2: Mikrobizide Mischung II

300 g des Mikrobizid-Komposits (BC A 21-51, Sanitized) werden in 700 g Butylacetat dispergiert. Anschließend wird diese Mischung in einer Mühle (PML I der Firma Bühler AG, Mahlraum Zr02, Mahlscheiben Zr02) mit 0,3 mm Yttrium-stabilisierten Zr02 Mahlkugeln der Firma Tosoh im Rezirkulationsmodus vermahlen. Der Energieeintrag beträgt 2000 kWh/t. Man erhält die Dispersion II.

Die Dispersion II wird mit 120 g CBT100-Pulver der Firma Cyclics versetzt. Anschließend wird die Dispersion durch Rühren homogenisiert und das Lösemittel am Rotationsverdampfer unter Vakuum entfernt. Das so erhaltene Pulver wird in einem Mörser aufgemahlen. Man erhält die erfindungsgemässe mikrobizide Mischung II (71,4 Gew.% Mikrobizid-Komposit (BC A 21-51)).

### Beispiel 3: Mikrobizide Mischung III

300 g des Mikrobizid-Komposits (BC A 21-51, Sanitized) werden in 700 g Butylacetat dispergiert. Anschließend wird diese Mischung in einer Mühle (PML I der Firma Bühler AG, Mahlraum ZrO2, Mahlscheiben Zr02) mit 0,3 mm Yttrium-stabilisierten ZrO2 Mahlkugeln der Firma Tosoh im Rezirkulationsmodus vermahlen. Der Energieeintrag beträgt 2000 kWh/t. Man erhält die Dispersion III. Die Dispersion III wird mit 150 g CBT100-Pulver der Firma Cyclics versetzt. Anschließend wird die Dispersion durch Rühren homogenisiert und das Lösemittel am Rotationsverdampfer unter Vakuum entfernt. Das so erhaltene Pulver wird in einem Mörser aufgemahlen.

Man erhält die erfindungsgemässe mikrobizide Mischung III (66,6 Gew.% Mikrobizid-Komposit (BC A 21-51)).

### Vergleichsbeispiel 1: Mikrobizide Mischung IV

1000 g des Mikrobizid-Komposits (BC A 21-51, Sanitized) werden in 3000 g Butylacetat dispergiert. Anschließend wird diese Mischung in einer Mühle (PML I der Firma Bühler AG, Mahlraum Zr02, Mahlscheiben ZrO2) mit 0,3 mm Yttrium-stabilisierten ZrO2 Mahlkugeln der Firma Tosoh im Rezirkulationsmodus vermahlen. Der Energieeintrag beträgt 2000 kWh/t. Man erhält die Dispersion IV. Anschließend wird das Lösemittel am Rotationsverdampfer unter Vakuum entfernt. Das so erhaltene Pulver wird in einem Mörser aufgemahlen und mit 250 g Licolub WE 4 (Wachs der Firma Clariant) homogen vermischt.

Man erhält eine mikrobizide Mischung IV (80 Gew.% Mikrobizid-Komposit (BC A 21-51)).

### Vergleichsbeispiel 2: Herstellung von nasszerkleinertem Mikrobizid-Komposit (BC A 21-51, Sanitized)

1000 g des Mikrobizid-Komposits (BC A 21-51, Sanitized) werden in 3000 g Butylacetat dispergiert. Anschließend wird diese Mischung in einer Mühle (PML I der Firma Bühler AG, Mahlraum ZrO2, Mahlscheiben ZrO2) mit 0,3 mm Yttrium-stabilisierten ZrO2 Mahlkugeln der Firma Tosoh im Rezirkulationsmodus vermahlen. Der Energieeintrag beträgt 2000 kWh/t. Man erhält die Dispersion IV- Anschließend wird das Lösemittel am Rotationsverdampfer unter Vakuum entfernt. Das so erhaltene Pulver wird in einem Mörser aufgemahlen. Man erhält das Mikrobizid-Komposit Pulver I (100 Gew.% Mikrobizid-Komposit (BC A 21-51)).

### Herstellung von mikrobizden Polymeren

Zur Herstellung der mikrobizden Polymere wird ein Extruder BTSK 30/40D der Firma Bühler AG verwendet. Hierbei werden die mikrobiziden Mischungen (I bis IV) bzw. das Pulver I verwendet.

### A) Herstellung von hochgefülltem mikrobizdem PBT

Zur Herstellung der hochgefüllten mikrobizden PBTs wird PBT Ultradur B 2550 Natur der Firma BASF verwendet.

### Extrudereinstellungen:

Einstellung des Extruders (BTSK 30/40D)

**Tabelle 1: Einstellung der Zylinder-Solltemperatur:**

| Zyl.1 | Zyl.2 | Zyl.3 | Zyl.4 | Zyl.5 | Zyl.6 | Zyl.7 | Zyl.8 | Zyl.9 | Zyl.10 | Sieb | Kopf |
|---|---|---|---|---|---|---|---|---|---|---|---|
| 20 °C | 260° C | 240 °C | 240 °C | 240 °C | 240 °C | 240 °C | 240 °C | 240 °C | 240 °C | 240 °C | 250 °C |

- Verfahrenslänge: 40 D
- PBT-Zugabe: Zylinder 1
- Zugabe der mikrobiziden Mischungen (I bis IV) bzw. Pulver 1 : Zylinder 3
- Atmosphärische Entgasung: Zylinder 3, Vakuumentgasung: Zylinder 8
- Siebe: 50/325/50 Mesh
- Spez. Energie: 0,25 kWh/kg
- Düse: 1 x 8,0 mm

### Beispiel 4: Hochgefülltes mikrobizides PBT I

Aus der in Beispiel 1 erhaltenen mikrobiziden Mischung I wird mit den oben beschrieben Parametern ein mikrobizides PBT I mit einem Feststoffgehalt an Mikrobizid-Komposit (BC A 21-51) von 16,8 Gew. % hergestellt mit einem Melt Flow Index von 91 g/10 min bei 280 °C.

### Beispiel 5: Hochgefülltes mikrobizides PBT II

Aus der in Beispiel 2 erhaltenen mikrobiziden Mischung II wird mit den oben beschrieben Parametern ein mikrobizides PBT II mit einem Feststoffgehalt an Mikrobizid-Komposit (BC A 21-51) von 17 Gew. % hergestellt mit einem Melt Flow Index von 94 g/10 min bei 280 °C.

### Beispiel 6: Hochgefülltes mikrobizides PBT III

Aus der in Beispiel 3 erhaltenen mikrobiziden Mischung III wird mit den oben beschrieben Parametern ein mikrobizides PBT mit einem Feststoffgehalt an Mikrobizid-Komposit (BC A 21-51) von 19,4 Gew. % hergestellt mit einem Melt Flow Index von 100 g/10 min bei 280 °C.

### Vergleichsbeispiel 3: Hochgefülltes mikrobizides PBT IV

Aus der in Vergleichsbeispiel 1 erhaltenen mikrobiziden Mischung IV wird mit den oben beschrieben Parametern ein mikrobizides PBT IV mit einem Feststoffgehalt an Mikrobizid-Komposit (BC A 21-51) von 18 Gew. % hergestellt. Der Melt Flow Index kann nicht bestimmt werden.

### Vergleichsbeispiel 4: Hochgefülltes mikrobizides PBT V

Aus dem in Vergleichsbeispiel 2 erhaltenen mikrobiziden Pulver I wird mit den oben beschrieben Parametern ein mikrobizides PBT V mit einem Feststoffgehalt an Mikrobizid-Komposit (BC A 21-51) von 17,2 Gew. % hergestellt. Der Melt Flow Index kann nicht bestimmt werden.

### B) Herstellung von mikrobizdem PET aus hochgefülltem mikrobizdem PBT und Druckfilterwertbestimmung

Zur Herstellung der mikrobizden PETs wird PET G 6506 verwendet.
Aus den hochgefüllten mikrobizden PBTs aus den Beispielen 4 bis 6 und den Vergleichsbeispielen 3 und 4 werden unter Zugabe von PET mikrobizde PETs hergestellt sowie deren Druckfilterwert mittels des Druckfiltertesters FT-E20T-MP-IS der Firma Collin mit einem Sieb PZ 14 (Siebmaschenweite14 µm) bestimmt.

### Beispiel 7: Mikrobizides PET I

Mikrobizides PET I mit einem Mikrobizid-Komposit-(BC A 21-51 )-Feststoffgehalt von 2,5 % Gew. hergestellt aus mikrobizdem PBT I (Beispiel 4): Druckfilterwert 0,5 bar/g.

### Beispiel 8: : Mikrobizides PET II

Mikrobizides PET II mit einem Mikrobizid-Komposit-(BC A 21-51)-Feststoffgehalt von 2,5 % Gew. hergestellt aus mikrobizdem PBT II (Beispiel 5): Druckfilterwert 0,26 bar/g.

### Beispiel 9: : Mikrobizides PET III

Mikrobizides PET III mit einem Mikrobizid-Komposit-(BC A 21-51 )-Feststoffgehalt von 2,5 % Gew. hergestellt aus mikrobizdem PBT III (Beispiel 6): 0,28 bar/g.

### Vergleichsbeispiel 5: Mikrobizides PET IV

Mikrobizides PET IV mit einem Mikrobizid-Komposit-(BC A 21-51)-Feststoffgehalt von 2,5 % Gew. hergestellt aus mikrobizdem PBT IV (Vergleichsbeispiel 3): nicht bestimmbar, Sieb setzt sich zu.

### Vergleichsbeispiel 6: Mikrobizides PET V

Mikrobizides PET V mit einem Mikrobizid-Komposit-(BC A 21-51)-Feststoffgehalt von 2,5 % Gew. hergestellt aus mikrobizdem PBT V (Vergleichsbeispiel 4): nicht bestimmbar, Sieb setzt sich zu.

## Patentansprüche

1. Mikrobizide Mischung, welche Mikrobizid-Kompositpartikel und ein zyklisches Oligomer als Bindemittel aufweist.

2. Mischung nach Anspruch 1, **dadurch gekennzeichnet, dass** die Mikrobizid-Kompositpartikel Metallionen freisetzen, die aus der Kompositmatrix der Mikrobizid-Kompositpartikel austreten können.

3. Mischung nach Anspruch 2, **dadurch gekennzeichnet, dass** die Metallionen Silberionen und/oder Kupferionen sind.

4. Mischung nach einem der Ansprüche 1 bis 3, **dadurch gekennzeichnet, dass** die Mikrobizid-Kompositpartikel kleiner als 5 µm sind.

5. Mischung nach Anspruch 4, **dadurch gekennzeichnet, dass** die Mikrobizid-Kompositpartikel kleiner als 1 µm sind.

6. Mischung nach einem der Ansprüche 1 bis 5, **dadurch gekennzeichnet, dass** das Bindemittel ein zyklisches Ester-Oligomer ist.

7. Mischung nach einem der Ansprüche 1 bis 6, **dadurch gekennzeichnet, dass** das Bindemittel ein makrozyklisches Ester-Oligomer ist, das in seiner Molekülstruktur mindestens einen Ring besitzt, der durch fünf oder mehr kovalent gebundene Atome gebildet ist.

8. Mischung nach einem der Ansprüche 1 bis 7, **dadurch gekennzeichnet, dass** sie nur das Bindemittel und die Mikrobizid-Kompositpartikel enthält.

9. Mischung nach einem der vorhergehenden Ansprüche, welche ausserdem ein Polymer aufweist.

10. Mischung nach Anspruch 9, **dadurch gekennzeichnet, dass** das Polymer aus der Polyester, Polyamid, Polyolefin, Polyacrylat, Polyvinylchlorid und Polyurethan aufweisenden Gruppe ausgewählt ist.

11. Mischung nach Anspruch 9 oder 10, **dadurch gekennzeichnet, dass** der Anteil des Polymers grösser als 50 Gew.% ist.

12. Mischung nach Anspruch 11, **dadurch gekennzeichnet, dass** der Anteil des Polymers grösser als 60 Gew.% ist

13. Mischung nach einem der Ansprüche 1 bis 12, **dadurch gekennzeichnet, dass** sie als Schüttgut, insbesondere als Pulver oder Granulat, vorliegt.

14. Mischung nach einem der Ansprüche 1 bis 12, **dadurch gekennzeichnet, dass** sie als Fluid, insbesondere als Paste oder als dicke Flüssigkeit, vorliegt.

15. Mischung nach einem der Ansprüche 1 bis 12, **dadurch gekennzeichnet, dass** sie eine Flüssigkeit, wie Lösungsmittel oder Weichmacher, aufweist.

16. Verfahren zur Herstellung einer mikrobiziden Mischung, welches die folgenden Schritte aufweist:
a) Zerkleinern eines Mikrobizid-Komposits durch Scherung und/oder Prallung zu Mikrobizid-Kompositpartikeln;
b) Dispergieren der Mikrobizid-Kompositpartikel in einer Flüssigkeit zu einer Mikrobizid-Kompositpartikel-Suspension;
c) Vermischen der Mikrobizid-Kompositpartikel-Suspension mit einer ein zyklisches Oligomer aufweisenden Bindemittel-Lösung zu einer Mischung bestehend aus Bindemittel-Lösung und darin dispergierten mikrobiziden Mikrobizid-Kompositpartikeln;
d) Aufkonzentrieren der Mischung durch Entfernen mindestens eines Teils der Flüssigkeit.

17. Verfahren nach Anspruch 16, **dadurch gekennzeichnet, dass** die Schritte a) und b) durch Nassvermahlung in einer Mühle mit Mahlhilfskörpern durchgeführt werden.

18. Verfahren nach Anspruch 17, **dadurch gekennzeichnet, dass** die Schritte a) und b) in einer Rührwerkskugelmühle erfolgen, deren Prozessraum zumindest teilweise mit der Flüssigkeit gefüllt ist.

19. Verfahren nach Anspruch 16, **dadurch gekennzeichnet, dass** die Schritte a) und b) in einem Dreiwalzwerk durchgeführt werden.

20. Verfahren nach einem der Ansprüche 17 bis 19, **dadurch gekennzeichnet, dass** die in Schritt a) erzeugten Mikrobizid-Kompositpartikel auf Grössen unter 5 µm vermahlen werden.

21. Verfahren nach Anspruch 20, **dadurch gekennzeichnet, dass** die in Schritt a) erzeugten Mikrobizid-Kompositpartikel auf Grössen unter 1 µm vermahlen werden.

22. Verfahren nach Anspruch 16, **dadurch gekennzeichnet, dass** die Schritte a), b) und c) durch Nassvermahlung in einer Mühle mit Mahlhilfskörpern durchgeführt werden.

23. Verfahren nach Anspruch 22, **dadurch gekennzeichnet, dass** die Schritte a), b) und c) in einer Rührwerkskugelmühle erfolgen, deren Prozessraum zumindest teilweise mit Flüssigkeit gefüllt ist.

24. Verfahren nach einem der Ansprüche 16 bis 23, **dadurch gekennzeichnet, dass** in Schritt a) als Ausgangsmaterial vorzerkleinertes Mikrobizid-Komposit verwendet wird.

25. Verfahren nach einem der Ansprüche 16 bis 24, **dadurch gekennzeichnet, dass** als Bindemittel ein zyklisches Ester-Oligomer verwendet wird.

26. Verfahren nach einem der Ansprüche 16 bis 25, **dadurch gekennzeichnet, dass** als Bindemittel ein makrozyklisches Ester-Oligomer verwendet wird, das in seiner Molekülstruktur mindestens einen Ring besitzt, der durch fünf oder mehr kovalent gebundene Atome gebildet ist.

27. Verfahren nach einem der Ansprüche 16 bis 26, **dadurch gekennzeichnet, dass** als Flüssigkeit, wie Lösungsmittel oder Weichmacher, ein inertes organisches Lösungsmittel wie Butylacetat, MEK, MIBK, Toluol oder Xylol verwendet wird.

28. Verfahren zur Herstellung eines mikrobiziden Polymers durch Vermischen (Compoundieren) eines Polymers mit einer mikrobiziden Mischung gemäss einem der Ansprüche 1 bis 15.

29. Verfahren nach Anspruch 28, **dadurch gekennzeichnet, dass** das Polymer ein Polyester ist.

30. Verfahren nach Anspruch 28 oder 29, **dadurch gekennzeichnet, dass** das Vermischen (Compoundieren) in einem Mischer, einer Presse, einem Extruder oder Kombinationen dieser erfolgt.

31. Verfahren nach einem der Ansprüche 28 bis 30, **dadurch gekennzeichnet, dass** das fertige Polymer zu einem Schüttgut, insbesondere Pulver oder Granulat, verarbeitet wird.

32. Mikrobizides Polymer, insbesondere hergestellt mittels eines Verfahrens gemäss einem der Ansprüche 28 bis 31, welches Mikrobizid-Kompositpartikel, ein zyklisches Oligomer als Bindemittel und ein Polymer aufweist.

33. Polymer nach Anspruch 32, **dadurch gekennzeichnet, dass** die Mikrobizid-Kompositpartikel Metallionen freisetzen, die aus der Kompositmatrix der Mikrobizid-Kompositpartikel austreten können.

34. Polymer nach Anspruch 32, **dadurch gekennzeichnet, dass** die Metallionen Silberionen und /oder Kupferionen sind.

35. Polymer nach einem der Ansprüche 32 bis 34, **dadurch gekennzeichnet, dass** die Mikrobizid-Kompositpartikel kleiner als 5 µm sind.

36. Polymer nach Anspruch 35, **dadurch gekennzeichnet, dass** Mikrobizid-Kompositpartikel kleiner als 1 µm sind.

37. Polymer nach einem der Ansprüche 32 bis 36, **dadurch gekennzeichnet, dass** der Anteil an Mikrobizid-Komposit im Bereich von 0,1 Gew.% bis 30 Gew.% liegt.

38. Polymer nach einem der Ansprüche 32 bis 37, **dadurch gekennzeichnet, dass** es ein zyklisches Ester-Oligomer aufweist.

39. Polymer nach einem der Ansprüche 32 bis 38, **dadurch gekennzeichnet, dass** es ein makrozyklisches Ester-Oligomer aufweist, das in seiner Molekülstruktur mindestens einen Ring besitzt, der durch fünf oder mehr kovalent gebundene Atome gebildet ist.

40. Verwendung des mikrobiziden Polymers gemäss Anspruch 32 bis 39 zur Herstellung von Formkörpern, insbesondere zur Herstellung von Preforms durch Spritzgiessen oder zur Herstelllung von Flaschen durch Streckblasformen.

41. Verwendung des mikrobiziden Polymers gemäss Anspruch 32 bis 39 zur Herstellung von Fasern, insbesondere zur Herstellung von Textilfasern mittels Spinnverfahren.
